# EUROPEAN PATENT APPLICATION

(11) **EP 2 031 744 A1**
(43) Date of publication of application: **04.03.2009**
(21) Application number: 07017115.2
(22) Date of filing: 31.08.2007
(51) Int. Cl.: H02M 1/092, H01S 5/0683, H04B 10/12

(54) **Power converter, in particular for railway traction vehicle**

(71) Applicant: Bombardier Transportation GmbH, 10785 Berlin (DE)
(72) Inventor: Ulfstedt-Mattsson, Johan, 72246 Västeras (SE); Belwon, Waldemar, 722 41 Västeras (SE)
(74) Representative: Patentanwälte Bressel und Partner

(57) **Abstract**

The present invention relates to a method of operating a power converter, in particular a power converter for delivering electric power to a driving motor (M) of a railroad traction vehicle, wherein the power converter comprises:
- at least one electronic switch (1) having a control electrode (119) for controlling the switching state of the switch (1),
- a drive unit (2) for driving a current to and/or from the control electrode (119),
- a converter control unit (3) for controlling an operation of the converter,
- an optical signal connection (8, 15) between the drive unit (2) and the control unit (3) for transferring optical signals, the optical signal connection (8, 15) having a first end, where the optical signals are sent, and having a second end opposite to the first end, where the optical signals are to be received and recognised,

wherein the method includes:
(a) transferring optical signals via the optical signal connection (8, 15), starting the transfer while an intended signal intensity of the optical signal is set to an initial value,
(b) varying the intended signal intensity of the optical signals,
(c) repeatedly detecting whether the optical signals, which are to be sent with the respective intended signal intensity and are to be received at the second end of the optical signal connection, are recognised at the second end or are recognised as expected at the second end.

## Description

The present invention relates to a power converter, such as an inverter. More particularly, the present invention relates to a power converter, which is used to provide driving motors of railway traction vehicles with electric energy. In addition or alternatively, the invention can be applied in situations where the power, which is provided to the power converter, is withdrawn from an electric power supply network or is provided by a generator, or vice versa, the power is provided by the power converter to the network. Possible applications of the invention are, for example, rectifier modules for line voltage or generators, auxiliary converters for providing auxiliary power for fans, pumps or other auxiliary devices like battery chargers. These auxiliary devices may be device is located within a railway vehicle.

Nowadays, power converters comprise electronic switches like gate turn-off thyristor (GTO) or insulated gate bipolar transistors (IGBT). The switching element is controlled using a control electrode, such as the gate of the IGBT. Correspondingly, it is common practice to use a drive unit for driving electric currents to and from the control electrode.

On the other hand, a power converter usually comprises a plurality of electronic switches and, therefore, the correct timing of the processes of switching-on and switching-off the switches is essential. Therefore, power converters comprise a converter control unit for controlling the drive units.

It has been proposed earlier to connect the converter control unit and the drive units via optical links, such as glass-fibre cables. Since there is also information which is to be sent from the drive units to the converter control unit, optical links are also used for transferring optical signals from the drive units to the converter control unit.

In particular in the environment of machine rooms like the machine rooms of railroad traction vehicles (e.g. locomotives) optical links may deteriorate due to aging of components and devices and due to pollution, such as dust. Another problem is the fact that components and devices which are used to operate optical links in converters vary with regard to the intensity of the optical signals which are to be transmitted via the optical link or with respect to the sensitivity for the reception of the optical signals at the other end of the optical link. Therefore, it has been necessary to adapt the intensity and/or sensitivity. Damping in the optical link may also vary due to variation in the length of the optical link and possible interconnections from the link to another link or other section of the link.

Still another problem is related to the long lifetime (e.g. up to 30 years) for which power converters for railroad traction vehicles are manufactured. Once the required intensity of the optical signals is adjusted, the optical link will operate for a long time. However, as a result of the first problem mentioned above (the deterioration and pollution) the optical link may fail completely without any warning before. One measure to increase the duration of failure-free operation may be to increase the initial intensity to which the optical link components are adjusted. However, higher intensity also means increased wear. An optical transmitter like a laser may actually fail earlier if the initial intensity is higher. Very high intensities may even lead to problems at the other end of the optical link. High intensity pulses may be recognised as two pulses.

A side constraint for the development of drive units for control electrodes of electronic switches is the requirement of high reliability, extremely high operation frequency (especially for applications like switching IGBTs in locomotives) and absolute precision in timing. If the execution of the action to be performed after receipt of a light pulse is delayed or executed too early, the operation of the whole converter may be interrupted, or the converter may even be damaged or destroyed. Therefore, the complexity or the design of electrical circuits within the drive unit is limited.

It is an object of the present invention to increase the lifetime of an optical link within a power converter, while the robustness and precision of the converter control unit and the drive units shall not be deteriorated. It is a further object of the invention to allow the use of components with varying properties regarding the intensity and/or sensitivity of/for optical signals. It is still a further object of the present invention to obtain an indication or warning before an optical link completely fails.

It is a basic idea of the present invention to perform (once or repeatedly) a test procedure which tests the optical link. The intensity with which the optical signals are to be sent is varied during the test. Consequently, an appropriate value of the intensity of the transmitted optical signals can be found which is ideally higher by some amount than the minimum intensity which still results in the recognition of optical signals at the receiving end of the optical link. On the other hand, the intensity can be limited to a reasonable level which does not cause unnecessarily high wear.

Preferably, the converter is adapted to perform a self-adjustment of the intensity as a result of the test.

In any case, the test allows for adjustment of the intensity. Therefore, components with varying properties can be used for the optical link and the lifetime can be optimized and with an over all improvement in lifetime and reliability of the system. In particular, the first test can be performed during production of the converter so that the effort for manually adjusting the converter can be reduced. Furthermore, since components with varying properties can be used, costs for buying specifically selected components with lower variations than standard components can be saved.

In addition, the intensity which is identified from the test can be used as a quality measure and components with poor performance (e.g. requiring too high drive currents) can be identified and replaced immediately during production of the converter. However, if the performance of the components deteriorates and leads to an increased minimum intensity during lifetime of the optical link, the quality measure indicates that the optical link needs maintenance. Continued operation until the converter is intended for regular service may be allowed, depending on the test result.

In particular, there may be the two following alternatives for handling the test signals which are transferred via the optical link. Firstly, it can just be detected whether the test signal is received at the receiving end (the second end) of the optical link. Secondly, the test signal may be a known signal (e.g. a light pulse having a nearly constant intensity over a predetermined duration) and it can be detected whether the test signal is received as expected (this case is referred to and the following as "correctly" received, identified or detected, in contrast to "not correctly"). A specific logic may be used to decide whether the test signal is received correctly. Reasons for not correctly receiving the test signal (other than the intensity being too small) may be distortion of the optical link (such as strong magnetic fields), too large intensities (resulting in double pulses received instead of a single pulse) and defects of the devices (such as microelectronic circuitry) which are used to transfer the test signal.

Checking if the test signal is received correctly, makes it possible not only testing whether the signal intensity is high enough, but also testing whether the signal intensity is too high.

For example, the smallest value for which the optical signals are recognised or recognised correctly during the test at the receiving end of the optical link may be compared to a predetermined threshold value. It is than decided that the optical signal connection cannot be operated if the smallest value for which the optical signals are recognised is equal to (or alternatively is equal to or greater than) the threshold value. In a variant of the procedure the same comparison with a threshold value may be performed, but it is decided that the optical signal connection means maintenance if the smallest value is equal to (or is equal to or greater than) the threshold value.

However, such service alarms may also be determined in a different manner using the test results. In order to monitor the deterioration of the optical link, the value which is the signal intensity adjusted to may be saved in the converter, in particular in the unit which comprises the optical signal generator. Alternatively or in addition, other test results, such as the smallest signal intensity which leads to recognisable optical signals at the receiving end of the optical link, may be saved.

Such saved information can be used to be compared with test information from a further test or from plural further tests of the same optical link during lifetime of the converter.

Of course, preferably all optical links of the converter are tested according to the present invention. In particular, each drive unit for driving a specific control electrode of an electronic switch may have at least two optical connections to the higher-order converter control unit. Higher-order means that the control unit controls the operation of the drive unit. For example, there is one optical connection for transferring optical signals from the control unit to the drive unit and there is an additional optical connection for transferring optical signals from the drive unit to the converter control unit.

A preferred approach for performing the test is to start the test with an initial value of the intended signal intensity and to decrease the value. After decrease of the value, it is detected whether the optical signals are recognised or are correctly recognised at the receiving end of the optical link. If yes, the two steps of decreasing the value and of detecting the recognition are repeated until the optical signals are no longer recognised or are no longer recognised correctly at the receiving end.

The approach can be implemented with particularly low effort since a very simple logic is needed to decrease the value and to detect the recognition.

In particular, the following is proposed: A method of operating a power converter, in particular a power converter for delivering electric power to a driving motor of a railroad traction vehicle, wherein the power converter comprises:
- at least one electronic switch having a control electrode for controlling the switching state of the switch,
- a drive unit for driving a current to and/or from the control electrode,
- a converter control unit for controlling an operation of the converter,
- an optical signal connection between the drive unit and the control unit for transferring optical signals, the optical signal connection having a first end, where the optical signals are sent, and having a second end opposite to the first end, where the optical signals are to be received and recognised,
   wherein the method includes:
   (a) transferring optical signals via the optical signal connection, starting the transfer while an intended signal intensity of the optical signal is set to an initial value,
   (b) varying the intended signal intensity of the optical signals,
   (c) repeatedly detecting whether the optical signals, which are to be sent with the respective intended signal intensity and are to be received at the second end of the optical signal connection, are recognised at the second end or are recognised as expected at the second end.

Furthermore, the present invention also includes: A power converter, in particular a power converter for delivering electric power to a driving motor (M) of a railroad traction vehicle, wherein the power converter comprises:
- at least one electronic switch (1) having a control electrode (119) for controlling the switching state of the switch (1),
- a drive unit (2) for driving a current to and/or from the control electrode (119),
- a converter control unit (3) for controlling an operation of the converter,
- an optical signal connection (8, 15) between the drive unit (2) and the control unit (3) for transferring optical signals, the optical signal connection (8, 15) having a first end, where the optical signals are sent, and having a second end opposite to the first end, where the optical signals are to be received and recognised,
   wherein the power converter further comprises:
- an optical signal generator (10) for generating the optical signals at the first end,
- an optical signal receiver (12) for receiving the optical signals at the second end,
- a setting device (9) for setting an intended signal intensity of the optical signals,
- a detector for detecting whether the optical signals are recognised at the second end,
   and wherein the power converter is adapted to
   (a) transfer optical signals via the optical signal connection (8, 15), starting the transfer after the setting device (9) has set an intended signal intensity of the optical signal to an initial value,
   (b) vary the intended signal intensity of the optical signals,
   (c) repeatedly detect whether the optical signals, which are to be sent with the respective intended signal intensity and are to be received at the second end of the optical signal connection (8, 15), are recognised at the second end or are recognised as expected at the second end.

When the method of the present invention is described in more detail within this description, this also relates to the description of the converter, since the converter can be adapted to perform the method automatically. In particular, the evaluation of the test can be performed using more intelligent microprocessors within the converter control unit compared to the simple logic within the drive unit.

In the preferred embodiment of the method, wherein the initial intended signal intensity is decreased, it may be decreased continuously (for example as a linearly decreasing function of time) or it may be decreased step-wise. The step-wise decrease has the advantage that the detection result can unambiguously assigned to the intended signal intensity which is set. The formulation "intended" signal intensity is used, since it is not known in advance whether the optical signal generator will respond in the desired or expected manner.

As mentioned before, the test result which includes the detection results only in the narrower meaning, but also may include further information, maybe processed by the converter control unit, although the detection results are obtained within the drive unit. In this case, it is preferred that the converter comprises a connection for transferring the detection results from the receiving end of the optical link (the so-called second end) to the sending end of the optical signal connection (the so-called first end). In any case, such a connection makes it possible to transfer the test results to the side of the optical signal connection where the information about an appropriate intensity of the optical signals is needed.

When the intended signal intensity is (for example step-wise) decreased, a count of a counter may be changed by one step if the optical signals are still recognised after the decrease. A counter is particularly easy to implement and does not occupy significant resources within the respective unit.

As mentioned earlier, the operation value which is used as the value of the intended signal intensity after performance of a test, is set to a level which is higher than the smallest value for which the optical signals are recognised during the test. The difference between the smallest value and the operation value may be given by a predetermined difference or by a percentage of the smallest value, for example.

In practice, the optical signal generator (such as a laser) may be driven or operated during an adjustable electric current, the drive current. It is therefore possible to set the intended intensity level of the optical signals to be produced by setting the drive current.

Examples of the invention will now be described with reference to the attached drawing. The Figures of the drawing show:
Figure 1A simplified block diagram illustrating parts of an arrangement for controlling the operation of a power converter and for driving electronic valves (switches) of the converter;
Figure 2 a schematic block diagram showing a specific embodiment of a power converter, the arrangement of all drive units for driving currents to and from switch control electrodes and also showing the connections between a converter control unit and the drive units;
Figure 3 a diagram comprising the intensity of an optical signal as a function of time.

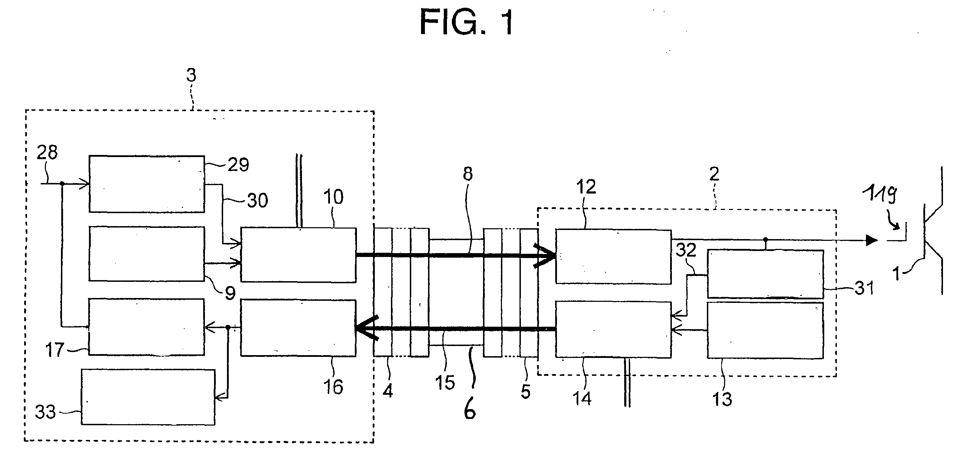

Figure 1 shows a preferred embodiment of the interconnections between a drive unit 2 and a converter control unit 3. The drive unit 2 serves to drive currents to and from a control electrode 119 of a semiconductor switch 1. In the specific embodiment, the semiconductor switch 1 may be an IGBT.

Both, the converter control unit 3 and the drive unit 2 may comprise at least one microelectronic device for performing digital data processing. In particular, the units denoted be reference numerals 13, 31, 29, 9, 17 and 33 may be realised by hardware or a combination of hardware and software for digital data processing.

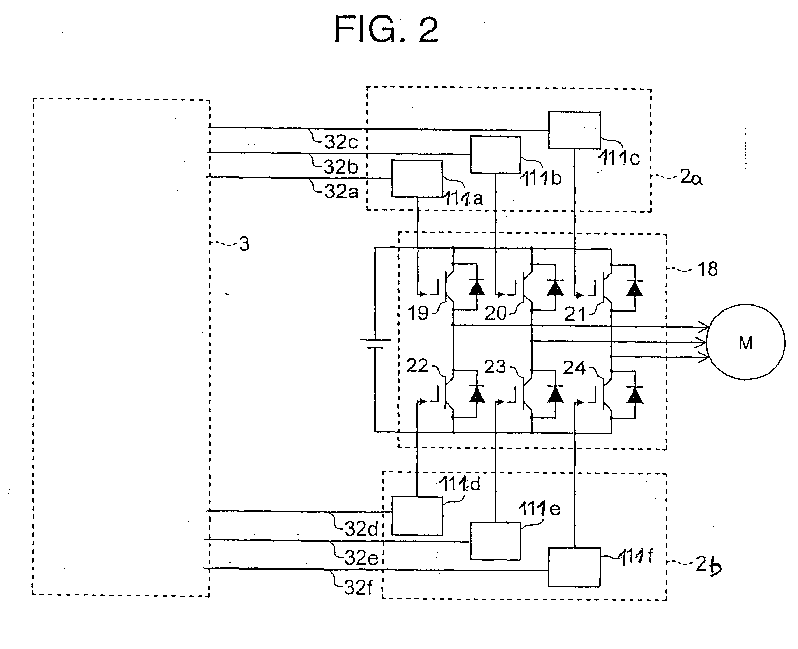

As shown in Figure 2, there may be one converter control unit 3 controlling a plurality of drive units 2a, 2b, wherein each of the drive units 2 may comprise driving stages 111a to 111f, each of the driving stages 111 driving be current to and from one control electrode of a semiconductor switch 19 to 24. The semiconductor switches 19 to 24 are arranged in three phases 19, 22; 20, 23; 21, 24 for delivering electric power to a three-phase electric machine M. The arrangement 18 of the six switches 19 to 24, each combined with a freewheeling diode, is the heart of the power converter shown in Figure 2. However, the illustration is simplified and further parts and elements of the converter are omitted, like the electric connection from the arrangement 18 to an electric power source, for example to a generator which is driven by a Diesel-machine of a railroad locomotive or to an electric power net which is installed next to the railroad for delivering electric energy via a pantograph or via a similar device to an electric locomotive.

The structure of drive units 2 and drive stages 111 shown in Figure 2 is just an example. Other arrangements are also possible. However, it is preferred, that each drive stage for driving the control electrode of a particular semiconductor switch is controlled using a separate optical link 32a to 32f to the converter control unit 3. It is also possible to use more than one converter control unit, for example one converter control unit for controlling drive stages 111 a to 111 c and another converter control unit for controlling the drive stages 111d to 111f. However, in this case, it is preferred that the two converter control units are controlled by a common control device. A single converter control unit is common practice these days.

Also, the present invention is not restricted to inverters. The power converter may also be a DC to DC converter or an AC to DC converter, for example.

The optical links 32 shown in Figure 2 may comprise more than one optical signal path in each case. This means that for example the two optical signal paths 8 and 15 shown in Figure 1 may be part of the same optical link, wherein the signal paths 8 and 15 may comprise more than one optical fibre. In practice the optical link may be a single glass fibre cable or may be part of a glass fibre cable.

The optical transfer paths 8, 15 shown in Figure 1 serve to transfer optical signals from the converter control unit 3 to the drive unit 2 (path 8) and to transfer optical signals from the drive unit 2 to the converter control unit 3 (path 15). They may be part of a common cable 6 which is connected to the converter control unit 3 using a connector 4 and which is connected to the drive unit 2 using a connector 5.

The optical signal path 8 originates at a converter unit 10 of the converter control unit 3, wherein the converter unit 10 is adapted to convert electrical signals (in particular digital signals) to the optical signals which are to be transferred via the path 8 to the drive unit 2.

Correspondingly, the path 15 originates at a converter unit 14 for converting electrical signals into optical signals within the drive unit 2.

There are corresponding converter units 12 (within drive unit 2) and 16 (within converter control unit 3) for converting the optical signals at the end of path 8 or 15 to an electrical signal (in particular a digital signal).

The converter units 10 and 14 are connected to a power source as indicated by a double line in each case. The corresponding electric power is used to produce the optical signals, for example using a laser (not shown in detail) in the converter unit 10 or 14.

An intensity control device 9 is connected to the converter unit 10 and an intensity control device 13 is connected to the converter unit 14. The intensity control devices 9, 13 are adapted to transfer an intensity control signal to the converter unit 10 or 14 and the converter unit 10, 14 produces optical signals such as light pulses at an optical signal intensity which corresponds to the intensity control signal. This means, the intensity (in particular the light flux) of the optical signals is controlled by the intensity control devices 9, 13. These devices 9, 13 may be part of a microelectronic device, such as a microcomputer. The microelectronic device controls the intensity control units 9, 13 according to the present invention. Examples of specific embodiments will be described later.

On the other hand, the converter units 12 and 16 for converting the optical signals to electrical signals are in each case connected to a detector device 31 (as part of the drive unit 2) and 33 (part of the converter control unit 3). The detector devices 31, 33 are adapted to detect whether the converter unit 12 or 16 which is connected to the detector device 31 or 33, is outputting an electrical signal which corresponds to an optical signal received by the converter unit 12 or 16.

The detector units 31, 33 may be adapted to generate a counting pulse if the detecting device receives an electrical output signal from the converter unit 12 or 16 after elapse of a predetermined time interval. For example, when the optical signal intensity is decreased step-wise and a step of reducing the optical intensity has been performed, an electrical signal is either output by the converter unit 12 or 16 (in case that the optical signal intensity is still high enough to be recognised or correctly recognised by the converter unit 12 or 16) or is not output by the converter unit 12 or 16 (in case that the intensity of the received optical signal is not high enough for recognition / correct recognition). Consequently, the detector device 31 or 33 detects whether the converter unit 12 or 16 has recognised the receipt of an expected optical signal.

It should be noted that the optical signal which is actually produced by the converter unit 10 or 14 can become significantly smaller during the lifetime of the converter unit, although the same intensity control signal is input to the converter unit 10, 14. In other words, it may become necessary to request a higher intensity of the optical signal by inputting a correspondingly increased value of the intensity control signal in order to produce optical signals which still can be recognised by the converter units 12 or 16. In other words, while the produced optical signal intensity may correspond to a particular value of the intensity control signal at a given point in lifetime, the same produced optical signal intensity may correspond to a different value of the intensity control signal at a later point in lifetime. There are several possible reasons for this. For example, a laser which is used to produce the optical signals may deteriorate. Furthermore, the electrical resistance of any part of the electric power supply of the converter unit 10 or 14 may increase during lifetime. Other reasons and factors which may cause a varying intensity are: the deterioration of the optical fiber over time, damage to the optical fiber during service, damage due to vibration during vehicle operation, deterioration due to temperature cycling, corrosive effects of gasses in the ambient, pollution of transmitter and receiver lenses due to dust, condensation etc., damage of interfaces or other devices which are used to transfer of the optical signals.

The present invention not only makes it possible to compensate for deterioration, it also gives the opportunity to handle fluctuations in the manufacturing of converter units or of the converter control device or of the drive circuit. Although having the same specification, converter units for converting electrical to optical signals may respond to the same intensity control signal by producing optical signals at different intensity level.

In addition, the present invention also allows using converter units for producing optical signals having different specifications and/or characteristics.

Before a specific example of a method for adapting the intensity will be described in detail, the normal operation of the arrangement shown in Figure 1 will be explained.

When a request to switch on or to switch off the switch 1 is generated within the converter control device 3 or arrives at the converter control device 3 (the request is transmitted via line 28) a unit 29 receives the request and outputs via line 30 a corresponding control signal to converter unit 10. Converter unit 10 converts the signal received via line 30 into a corresponding optical signal and transfers the optical signal via path 8 to converter unit 12 of drive unit 2. Drive unit 2 drives the charging or discharging (depending on the type of the received signal) of control electrode 119 using additional units or devices which are not shown in detail in Figure 1.

Furthermore, further functions, such as measuring the current carried by the switch 1 or the voltage across the open switch 1 and/or such as performing self-diagnosis, can be implemented in the drive unit 2. Corresponding information is transferred from the drive unit 2 to the converter control unit 3 via path 15. In doing this, unit 31 of drive unit 2 outputs an electrical signal to converter unit 14 which converts the electrical signal into the optical signal. Unit 13 of drive unit 2 sets the desired output intensity similarly to unit 9 in device 3.

The optical signal is received by converter unit 16 of converter control unit 3 and is converted into an electrical signal which is output to a unit 17 of converter control unit 3. Depending on the type of information transferred, unit 17 may output signals to other devices or units as indicated by the connection to line 28.

Preferably, there is also a connection 32 from detector device 31 to converter unit 14 for transferring an electrical signal. Converter unit 14 can produce a corresponding optical signal which is transferred to unit 17. Thus, detector device 31 can transmit the result of the detection (for example the number of counted intensity levels of the optical signal received by unit 12) to the converter control unit 3 and unit 3 can either perform itself an evaluation of the detection result or can pass the detection result to a different device, for example via line 28. Examples how the detection result can be evaluated or used have been given before.

Now, an example of analysing the optical link between the converter control unit and the drive unit is described in detail. The analysis refers to signal path 8, but can also refer to any other optical signal path within a power converter.

When the operation of the optical path is initialised, for example when the converter control unit has been switched on, a process of analysing the optical path is initiated at time t1. For example by generating a corresponding intensity control signal (unit 9 in Figure 1), an optical signal is produced by the converter unit 10. The level of intensity I is chosen and predetermined in such a manner that it can be expected that the optical signal will be recognised by converter unit 12. For example, a laser of converter unit 10 may be driven with the highest possible drive current. This highest possible drive current is usually unnecessary to produce recognisable optical signals and would produce undesired heat within the converter control device 3. Furthermore, such a high drive current might be the reason for a deterioration of the laser, if used over long periods. However, producing an optical signal which can be expected to be recognised at the end of the optical signal path gives the opportunity to test the functionality of the optical path and the involved components. If the highest possible intensity of the optical signal does not result in the recognition of an optical signal at the end of the path, there is a failure of the optical link and it is decided that the initialization has failed.

However, if the optical signal at the highest intensity level is recognised by converter unit 12, it produces a corresponding electrical output signal and this signal is detected by detection device 31. Preferably, the detection takes place at a predetermined point in time that is the end of a time interval of predetermined lengths starting with time t1 for example. The detection of the signal at time t2 results in a counting pulse which increases the count of a counter from 0 to 1.

At a predetermined time after start of the initialization or after time t2, the intensity of the optical signal is decreased by a predetermined amount or by a predetermined percentage. This is done, for example, by reducing the intensity control signal by a predetermined amount or percentage. After reduction, the intensity is kept constant again. A predetermined time after the reduction of the intensity (time t3, the predetermined time may again be determined by the end of a time interval of predetermined length, starting for example at time t1) the detection device 31 tries to detect an electrical signal output by the converter unit 12. If the detection is successful, the converter unit 12 has recognised an optical signal at the reduced intensity level. If the detection device 31 has detected the signal, it will for example produce a further counting signal which increases the count of the counter by one. If the detector device does not detect the electrical output signal at time t3, the converter unit 12 has not detected the optical signal at the reduced intensity level. Consequently, the detector device 31 will terminate the analysis procedure, for example by outputting a corresponding signal via line 32 to converter unit 14.

If the electrical output signal has been detected by the detector device 31 the analysis procedure will continue by again reducing the intensity level and trying to detect the electrical output signal of converter unit 12 at a corresponding point in time after the reduction. The other steps of the procedure, as described before, will be repeated until the detection of the electrical output signal fails at a predetermined point in time.

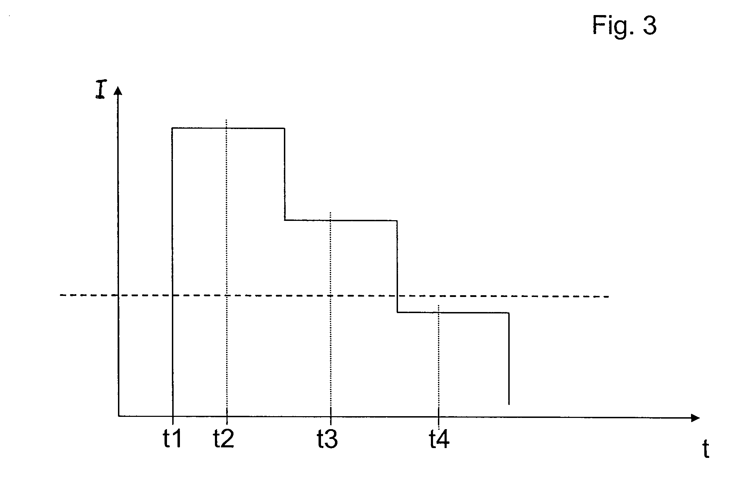

The example of Figure 3 shows that the other steps of the procedure are repeated once more and the detection at predetermined time t4 fails. The horizontal dashed line indicates that optical signals having smaller intensity cannot be recognised by the converter unit 12 in this specific example.

After termination of the analysis procedure the detection result, in particular the count value of the counter, will be evaluated and/or transmitted to another device. This makes it possible to decide whether the functionality of the optical path is still perfect, if the optical path and the related components need maintenance or if an operation of the optical path is no longer possible.

The analysis of the optical path using the method of successively reducing the intensity level has the advantage that it can be performed using very simple resources. For example, the detector device can easily be realised using an operational amplifier in a comparator configuration. For the timing of the detection, it is only necessary to initialize the timing and to use the counts of an internal clock of the respective unit (the drive unit or the converter control unit). Furthermore, a counter for counting the detection results can easily be implemented in hardware and/or using software. In any case, a very simple hardware or microcomputer is sufficient. Simple and highly reliable architecture of drive units is a key feature for compact and reliable drive units in a power converter.

## Claims

1. A method of operating a power converter, in particular a power converter for delivering electric power to a driving motor (M) of a railroad traction vehicle, wherein the power converter comprises:
- at least one electronic switch (1) having a control electrode (119) for controlling the switching state of the switch (1),
- a drive unit (2) for driving a current to and/or from the control electrode (119),
- a converter control unit (3) for controlling an operation of the converter,
- an optical signal connection (8, 15) between the drive unit (2) and the control unit (3) for transferring optical signals, the optical signal connection (8, 15) having a first end, where the optical signals are sent, and having a second end opposite to the first end, where the optical signals are to be received and recognised,
wherein the method includes:
(a) transferring optical signals via the optical signal connection (8, 15), starting the transfer while an intended signal intensity of the optical signal is set to an initial value,
(b) varying the intended signal intensity of the optical signals,
(c) repeatedly detecting whether the optical signals, which are to be sent with the respective intended signal intensity and are to be received at the second end of the optical signal connection, are recognised at the second end or are recognised as expected at the second end.

2. The method of the preceding claim, wherein the method further comprises transferring information whether the optical signals are recognised in step (c) to the first end of the optical signal connection (8, 15).

3. The method of one of the preceding claims, wherein in step (b) the intended signal intensity of the optical signals is decreased to a decreased value, which is smaller than the initial value, and it is detected in step (c) whether the optical signals, which are to be sent and are to be received at the second end of the optical signal connection (8, 15), are recognised at the second end, and
wherein steps (b) and (c) are repeated until the optical signals are no longer recognised or are no longer recognised as expected at the second end.

4. The method of the preceding claim, wherein the intended signal intensity is step-wise decreased in each performance of step (b).

5. The method of one of the two preceding claims, wherein a count of a counter is changed by one step if the optical signals are still recognised or are still recognised as expected in the performance of step (c).

6. The method of one of the preceding claims, wherein the method further comprises setting the intended signal intensity to an operation value which corresponds to an intended signal intensity for which the optical signals were recognised or were recognised as expected.

7. The method of the preceding claim, wherein the power converter is operated using the operation value.

8. The method of the preceding claim, wherein the operation value is saved,
wherein the method of one of the two preceding claims is repeated and
wherein a newly obtained operation value is compared to the saved operation value.

9. The method of one of the three preceding claims, wherein the operation value is set to a level higher than the smallest value for which the optical signals are recognised in step (c).

10. The method of one of the preceding claims, wherein the smallest value for which the optical signals are recognised in step (c) is compared to a predetermined threshold value and wherein it is decided that the optical signal connection cannot be operated if the smallest value is equal to or is equal to or greater than the threshold value.

11. The method of one of the preceding claims, wherein the smallest value for which the optical signals are recognised in step (b) is compared to a predetermined threshold value and wherein it is decided that the optical signal connection needs maintenance if the smallest value is equal to or is equal to or greater than the threshold value.

12. A power converter, in particular a power converter for delivering electric power to a driving motor (M) of a railroad traction vehicle, wherein the power converter comprises:
- at least one electronic switch (1) having a control electrode (119) for controlling the switching state of the switch (1),
- a drive unit (2) for driving a current to and/or from the control electrode (119),
- a converter control unit (3) for controlling an operation of the converter,
- an optical signal connection (8, 15) between the drive unit (2) and the control unit (3) for transferring optical signals, the optical signal connection (8, 15) having a first end, where the optical signals are sent, and having a second end opposite to the first end, where the optical signals are to be received and recognised,
wherein the power converter further comprises:
- an optical signal generator (10) for generating the optical signals at the first end,
- an optical signal receiver (12) for receiving the optical signals at the second end,
- a setting device (9) for setting an intended signal intensity of the optical signals,
- a detector for detecting whether the optical signals are recognised at the second end,
and wherein the power converter is adapted to
(a) transfer optical signals via the optical signal connection (8, 15), starting the transfer after the setting device (9) has set an intended signal intensity of the optical signal to an initial value,
(b) vary the intended signal intensity of the optical signals,
(c) repeatedly detect whether the optical signals, which are to be sent with the respective intended signal intensity and are to be received at the second end of the optical signal connection (8, 15), are recognised at the second end or are recognised as expected at the second end.

13. The power converter of the preceding claim, wherein in step (b) the intended signal intensity of the optical signals is decreased to a decreased value, which is smaller than the initial value, and it is detected in step (c) whether the optical signals, which are to be sent and are to be received at the second end of the optical signal connection (8, 15), are recognised at the second end, and wherein steps (b) and (c) are repeated until the optical signals are no longer recognised or are no longer recognised as expected.

14. The power converter of the preceding claim, further comprising an information transfer connection (32, 15), wherein the power converter is adapted to transfer information whether the optical signals are recognised in step (c) to the first end of the optical signal connection (8, 15).

15. The power converter of one of the preceding claims, wherein the power converter is adapted to set the intended signal intensity to an operation value which corresponds to an intended signal intensity for which the optical signals were recognised or were recognised as expected in step (c).

16. The power converter of one of the preceding claims, further comprising a data storage, wherein the power converter is adapted to save the operation value in the data storage and to compare the saved operation value with a newly obtained operation value.
